# EUROPEAN PATENT APPLICATION

(11) **EP 3 421 922 A1**
(43) Date of publication of application: **02.01.2019**
(21) Application number: 17756385.5
(22) Date of filing: 17.02.2017
(51) Int. Cl.: F28F 13/18, B32B 15/08, B32B 15/20, F28F 1/32, F28F 19/00, F28F 19/04

(54) **FIN MATERIAL AND HEAT EXCHANGER**

(30) Priority: 24.02.2016 JP 2016033395
(71) Applicant: UACJ Corporation, Tokyo 100-0004 (JP)
(72) Inventor: TOYAMA Tomoaki, Tokyo 100-0004 (JP); SEKO Yoshiya, Tokyo 100-0004 (JP); SASAZAKI Mikine, Tokyo 100-0004 (JP)
(74) Representative: Kramer Barske Schmidtchen Patentanwälte PartG mbB
(86) International application number: PCT/JP2017/005971
(87) International publication number: WO 2017/145946

(57) **Abstract**

A heat-exchanger fin material that excels in an adhesion-inhibition effect and removability of contaminants, and a heat exchanger that uses the same are provided. There are: a fin material (1) having a substrate (2) composed of aluminum, and a coating film (3) formed on at least one surface thereof; and a heat exchanger that uses the same. The coating film (3) has a positively-chargeable coating (31) on its outermost surface. The coating (31) is essentially composed of only at least one resin selected from the group consisting of cellulose-based resins, acrylic-based resins, vinyl alcohol-based resins, acrylamide-based resins, and ester-based resins. The surface roughness Ra of the coating film (3) is 100 nm or less.

## Description

### TECHNICAL FIELD

The present invention relates to a fin material used in a heat exchanger and to a heat exchanger that uses the same.

### BACKGROUND ART

Fin-tube-type heat exchangers are used in, for example, indoor units and outdoor units of air conditioners. A heat exchanger comprises metal tubes, through which a coolant flows, and numerous fins made of aluminum, through which the metal tubes pass. A hydrophilic-coating material or a water-repellent coating material is precoated on both sides of the fins, and the fins have a coating film on the surfaces thereof.

Various contaminants, such as dust, soot, and tobacco tar, adhere to the surfaces of the fins of a heat exchanger. Consequently, a method that prevents the adhesion of such contaminants and a method that facilitates the removal of adhered contaminants are known. Specifically, a method is known that prevents the adhesion of hydrophilic contaminants, such as dust, due to static electricity by, for example, coating an antistatic agent on the fin surfaces. In addition, a method is known that makes it easy to remove lipophilic contaminants, such as soot, by coating an oil-repellent fluororesin on the fin surfaces. However, there is a demand for further improvement in adhesion-prevention effects against contaminants, such as dust, that carry positive charges.

For example, in Patent Document 1, a technique is described that prevents the adhesion of tar components of tobacco by setting the absolute value of the amount of triboelectric charge of a surface-coating film of an electrically insulating substrate to 0-200 V. In addition, a fin having a hydrophilic blended film, which includes hydrophobic particles, formed thereon is described, for example, in Patent Document 2.

### PRIOR ART LITERATURE

### Patent Documents

Patent Document 1
   PCT International Publication No. WO 2006/134808
Patent Document 2
   Japanese Laid-open Patent Publication 2009-229040

### SUMMARY OF THE INVENTION

### PROBLEMS TO BE SOLVED BY THE INVENTION

However, in Patent Document 1, electric charge on a metal substrate that is generated by friction is easily dissipated. In addition, in Patent Document 2, although an attempt was made to inhibit the adhesion of hydrophobic and hydrophilic contaminants by using a blended film that includes a hydrophilic component and a hydrophobic component, there was a problem in that hydrophobic contaminants tend to adhere to the hydrophobic component, and hydrophilic contaminants tend to stick to the hydrophilic component. In particular, there is a tendency for positively charged contaminants, such as dust, to adhere to the fins of a heat exchanger. In addition, uncharged contaminants also tend to adhere. There is a demand for improvement in the adhesion inhibition and removability of such contaminants.

The present invention was conceived considering these problems, and an object of the present invention is to provide, for example, a heat-exchanger fin material that excels in adhesion-inhibiting effects and removability of contaminants, such as dust, and to provide a heat exchanger that uses the same.

### MEANS FOR SOLVING THE PROBLEMS

One aspect of the present invention is a heat-exchanger fin material comprising:
a substrate composed of aluminum; and
a coating film formed on at least one surface of the substrate and composed of a coating having one layer or two or more layers;
wherein the coating film has a positively-chargeable coating on its outermost surface;
the positively-chargeable coating is essentially composed of only at least one resin selected from the group consisting of cellulose-based resins, acrylic-based resins, vinyl alcohol-based resins, acrylamide-based resins, and ester-based resins; and
the surface roughness Ra of the coating film is 100 nm or less.

Another aspect of the present invention is a heat exchanger comprising a fin composed of the above-mentioned heat-exchanger fin material.

### EFFECTS OF THE INVENTION

The heat-exchanger fin material (hereinbelow, called "fin material" where appropriate) has, on its outermost surface, the positively-chargeable coating essentially composed of the resins described above. A positively-chargeable coating composed only of such specified resins tends to be positively charged by friction with air. Furthermore, because the above-mentioned resins that constitute the coating of the outermost surface are electrically insulating, they easily charge. Consequently, even if a positively charged contaminant, such as dust, approaches the surface of the coating film, which has the positively-chargeable coating on the outermost surface thereof, a repulsive force acts between the coating-film surface and the contaminant, and therefore the contaminant tends not to adhere.

In addition, from the viewpoint that the surface roughness Ra of the coating film is 100 nm or less and the coating film excels in surface smoothness, contaminants tend not to adhere. Consequently, not only do positively charged contaminants tend not to adhere, but also uncharged contaminants tend not to adhere. Furthermore, even if a contaminant adheres, the contaminant is easily washed away by condensed water or the like that adheres to the coating-film surface of the fin material, for example, during operation of the heat exchanger. In addition, if condensed water adheres to the coating-film surface of the fin material, then the amount of charge on the surface temporarily decreases and becomes zero; consequently, while it becomes easy for contaminants to adhere, adhered contaminants are easily washed away as described above. Furthermore, when the coating-film surface dries, because the positively-chargeable coating then carries positive charges once again, the adhesion-inhibiting effects on contaminants, such as dust, can be exhibited once again.

In addition, a positively-chargeable coating composed only of the resins described above excels not only in hydrophilic properties but also in hydrophilicity durability. Consequently, condensed water easily penetrates between adhered contaminants and the coating, and therefore contaminants adhered to the surface are easily washed away.

In addition, in a heat exchanger comprising the fins composed of the above-mentioned fin materials, the fins can exhibit excellent adhesion-inhibiting effects and removability of contaminants. Furthermore, they also excel in hydrophilic properties and hydrophilicity durability.

### BRIEF DESCRIPTION OF THE DRAWINGS

FIG. 1 is a cross-sectional view of a fin material, which has a substrate and a positively-chargeable coating, according to working example 1.
FIG. 2 is an explanatory diagram that shows a water-contact angle according to working example 1.
FIG. 3 is an explanatory diagram that shows an inhibition effect on the adhesion of contaminants to a surface of the fin material according to working example 1.
FIG. 4 is, according to working example 1, (a) a cross-sectional view of the fin material having a chemical-conversion coating or a primer layer between the substrate and a coating film, and (b) a cross-sectional view of the fin material having a coating-film layer comprising a positively-chargeable coating and another coating, such as a corrosion-resistant coating.
FIG. 5 is a schematic diagram of a heat exchanger according to working example 2.

### MODES FOR CARRYING OUT THE INVENTION

Embodiments of a fin material and a heat exchanger using the same will now be explained. The fin material comprises a substrate composed of aluminum. In the present specification, "aluminum" is a general term for a metal or an alloy in which aluminum is the principal constituent and is a general concept that includes pure aluminum and aluminum alloys.

A coating film formed on the substrate includes a coating having one layer or two or more layers. A coating formed by a single application of one coating material is one layer; furthermore, a coating that is formed by multiple applications of a coating material in which the composition is the same for each application is also one layer. The coating film has a positively-chargeable coating on its outermost surface.

Examples of resins that form the positively-chargeable coating are cellulose-based resins, acrylic-based resins, vinyl alcohol-based resins, acrylamide-based resins, and ester-based resins. At least one of these can be used. These resins have a carboxy group or a hydroxy group as the functional group.

The positively-chargeable coating is essentially composed only of the resins described above; it does not contain, for example, silica-based or titanium-based inorganic particles, water-soluble resins, or the like; it may contain unavoidable impurities, such as a resin cross-linking agent (e.g., a metal compound such as a Zr compound). As described above, the positively-chargeable coating is essentially composed of at least one resin selected from the group consisting of cellulose-based resins, acrylic-based resins, vinyl alcohol-based resins, acrylamide-based resins, and ester-based resins. The content of these resins in the positively-chargeable coating is preferably 99 mass% or more and more preferably 99.5 mass% or more.

The surface of the positively-chargeable coating will positively charge by friction with air. The surface electrical potential of the positively-chargeable coating varies depending on the type of resin in the positively-chargeable coating, the composition, the film thickness, the surface roughness, and the like and is within a range of, for example, +0.01 V to +10 V. In addition, the absolute value of the surface electrical potential varies not only in accordance with the coating but also with the external environment, such as the temperature and the humidity of the air.

The thickness of the positively-chargeable coating is preferably 0.1-6 µm. In this case, the positive charge on the positively-chargeable coating is more readily retained, and surface smoothness is more easily increased. From the same viewpoint, the thickness of the positively-chargeable coating is preferably 0.3-3 µm and more preferably 0.5-1.5 µm.

The coating film may have another coating in addition to the positively-chargeable coating. An example of such a coating is a corrosion-resistant coating composed of, for example, a urethane-based resin, an epoxy-based resin, or the like. Even if the coating film has another coating, the coating of the outermost surface is the positively-chargeable coating described above.

In addition, a primer layer may be formed between the coating film and the substrate. Thereby, adhesion between the substrate and the coating film can be further improved. The primer layer can be formed of at least one type selected from the group consisting of a urethane-based primer, an acrylic-based primer, and an epoxy-based primer.

In addition, a chemical-conversion coating may be formed between the coating film and the substrate or between the primer layer and the substrate. Adhesion between the coating film and the substrate or adhesion between the primer layer and the substrate can be improved by the chemical-conversion coating. The chemical-conversion coating can be formed by a phosphate-chromate treatment, a phosphate-zirconium treatment, a boehmite treatment, or the like.

The surface roughness Ra of the coating film on the fin material is preferably 100 nm or less. If the surface roughness Ra is more than 100 nm, then uncharged contaminants and the like tend to adhere and, furthermore, adhered contaminants tend not to come off. The surface roughness Ra of the coating film is preferably 50 nm or less and more preferably 20 nm or less. The surface roughness of the coating film is an arithmetic-mean roughness Ra as stipulated in JIS B0601-2001. The surface roughness Ra of the coating film can be controlled by adjusting the thickness of the coating film, the surface roughness of the substrate, and the like.

The contact angle of water on the surface of the coating film is preferably 40° or less. In this case, the surfaces of the fin material can sufficiently exhibit excellent hydrophilic properties. In addition, even immediately after the manufacture of a fin material, and even after the repeated immersion in water and drying as in the aging described below, the water-contact angle on the coating-film surface is, as described above, preferably 40° or less and more preferably 30° or less.

Fin materials are used in the manufacture of the heat exchanger as, for example, described below. Specifically, first, a coil-shaped fin material is cut to prescribed dimensions, and thereby a plurality of sheet-shaped fins is obtained. Subsequently, the fins are subject to slit formation, louver molding, and collar formation using a press. Next, the fins are arranged such that they are stacked in the state in which they are spaced apart from one another by a prescribed spacing while metal tubes, which are disposed at prescribed locations, are passed through holes provided in the fins. Subsequently, tube-expanding plugs are inserted into the metal tubes to enlarge the outer diameter of the metal tubes, and thereby the metal tubes and the fins are caused to closely contact each other. Thus, the heat exchanger can be obtained. The heat exchanger can be used in, for example, an indoor unit or an outdoor unit of an air conditioner.

### Working Examples

### (Working Example 1)

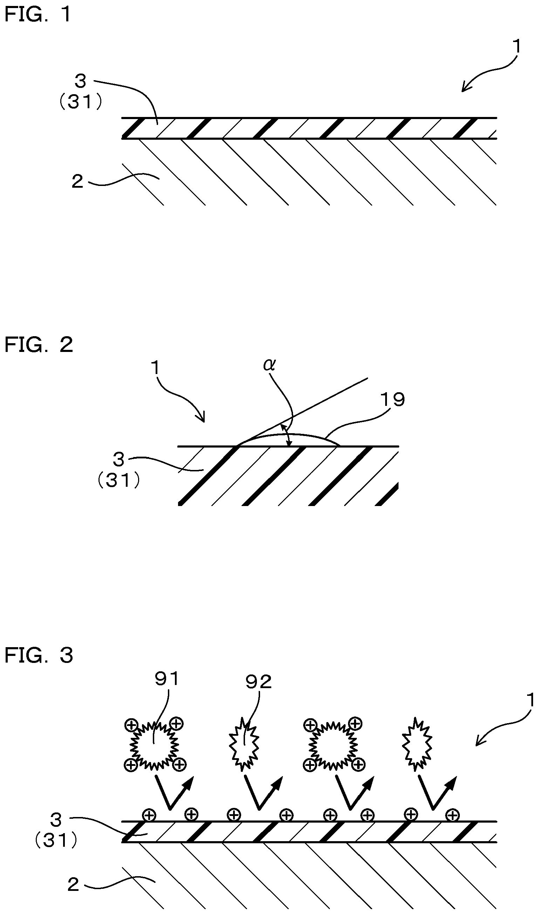

In the present example, multiple fin materials (specifically, sample E1 to sample E13 and sample C1 to sample C7) pertaining to working examples and comparative examples were prepared, and their characteristics were compared and evaluated. As shown in FIG. 1, a fin material 1 according to the working examples comprises: a substrate 2 composed of aluminum; and a coating film 3 formed on the surface(s) thereof. The coating film 3 comprises a positively-chargeable coating 31, which is essentially composed of at least one resin selected from the group consisting of cellulose-based resins, acrylic-based resins, vinyl alcohol-based resins, acrylamide-based resins, and ester-based resins. The surface roughness Ra of the coating film 3 is 100 nm or less. The substrate 2 is an aluminum sheet having a sheet thickness of 0.1 mm as stipulated in JIS A 1050-H26. It is noted that the fin material of the comparative example has a configuration that is the same as the working examples, except that the composition and surface roughness of the coating film differ, as shown in Table 1, which is discussed below.

The fin materials 1 of the samples were manufactured by applying coating materials, which contained the resin components of the compositions shown in Table 1 (discussed below), onto the substrates, thereby forming the coating films 3. Each coating film 3, i.e., the positively-chargeable coating 31, in the present example was formed directly on the substrate 2. In the manufacture of sample C7, a coating material containing a resin component and silica particles was used (refer to Table 1). It is noted that, in Table 1, CMC indicates carboxymethyl cellulose, PAA indicates polyacrylic acid, PAM indicates polyacrylamide, PVA indicates polyvinyl alcohol, PES indicates polyester, EPO indicates polyepoxy, PU indicates polyurethane, and PEG indicates polyethylene glycol.

As the surface roughness Ra of the coating film 2¹ for each of the samples, the arithmetic-mean roughness Ra according to JIS B0601-2001 was measured using a probe-type, surface-roughness measuring instrument (specifically, the scanning probe microscope JSPM-5200 made by JEOL Ltd.) compliant with JIS B0651-2001. The visual field during measurement was 25 µm × 25 µm. For each sample, arbitrary visual fields were selected at ten locations, the measurement described above was performed at each location, and the arithmetic mean of these ten locations was taken as the surface roughness Ra.
¹ Translator's note: Error in original. Should be "3".

Next, the surface electrical potential of the coating film of each sample in the dry state was measured as follows, and the results are shown in Table 1. The measurements were performed using the scanning probe microscope (i.e., SPM) JSPM-5200 made by JEOL Ltd. Specifically, a bias voltage was applied between the probe of the scanning probe microscope and an arbitrary location of the coating-film surface, and the surface electrical potential was calculated based on the change in frequency when the bias voltage was changed. The measuring method, the calculating method, and the like were in accordance with the manual of the JSPM-5200 made by JEOL Ltd. For each sample, the surface electrical potential was measured at ten locations, and the arithmetic-mean value thereof is shown in Table 1. It is noted that the surface electrical potentials shown in the table are representative values, and it was confirmed that, even for the same sample, variations arise in the measurement values due to external factors and the like, such as temperature and humidity. However, inversion of positive or negative in the charged state of the surface did not occur.

**Table 1**

| Sample No. | Surface Roughness Ra [nm] | Film Thickness [µm] | Component 1 | Content [mass%] | Component 2 | Content [mass%] | Component 3 | Content [mass%] | Surface Charge | Surface Potential of Coating Film [V] |
|---|---|---|---|---|---|---|---|---|---|---|
| E1 | 50 | 1 | CMC | 100 | - | - | - | - | + | +0.5 |
| E2 | 10 | 1 | CMC | 100 | - | - | - | - | + | +0.5 |
| E3 | 20 | 1 | CMC | 100 | - | - | - | - | + | +0.5 |
| E4 | 100 | 1 | CMC | 100 | - | - | - | - | + | +0.5 |
| E5 | 50 | 0.1 | CMC | 100 | - | - | - | - | + | +0.01 |
| E6 | 50 | 6 | CMC | 100 | - | - | - | - | + | +10 |
| E7 | 50 | 1 | PAA | 100 | - | - | - | - | + | +5 |
| E8 | 50 | 1 | PAM | 100 | - | - | - | - | + | +8 |
| E9 | 50 | 1 | PVA | 100 | - | - | - | - | + | +10 |
| E10 | 50 | 1 | PES | 100 | - | - | - | - | + | +2 |
| E11 | 50 | 1 | PVA | 90 | PES | 10 | - | - | + | +8 |
| E12 | 50 | 1 | CMC | 75 | PAA | 25 | - | - | + | +6 |
| E13 | 50 | 1 | CMC | 75 | PAA | 20 | PAM | 5 | + | +7 |
| C1 | 50 | 1 | EPO | 100 | - | - | - | - | - | -10 |
| C2 | 50 | 1 | CMC | 50 | PU | 50 | - | - | - | -4 |
| C3 | 120 | 1 | CMC | 100 | - | - | - | - | + | +0.5 |
| C4 | 150 | 7 | CMC | 100 | - | - | - | - | + | +15 |
| C5 | 150 | 1 | CMC | 50 | PEG | 50 | - | - | + | +0.25 |
| C6 | 50 | 1 | PU | 100 | - | - | - | - | - | -8 |
| C7 | 150 | 1 | CMC | 50 | Silica particles | 50 | - | - | + | +8 |

For each sample, evaluations of the hydrophilic properties, the contamination-adhesion properties, the contamination-removing properties, corrosion resistance, and moisture resistance were performed as below. The results thereof are shown in Table 2.

### (1) Hydrophilic Properties

After the manufacture of each sample, the initial water-contact angle was measured. Specifically, as shown in FIG. 2, 2 µl of a water droplet 19 were dropped onto the coating film 3 of the fin material 1 of each sample. Then, the contact angle α of the water droplet 19 on the coating film 3 was measured. This was taken as the initial water-contact angle. Next, after aging of each sample, the water-contact angle α was measured. Specifically, first, aging was performed, wherein a cycle, in which every sample was immersed in ion-exchanged water for 2 min and then dried by air blowing for 6 min, was performed for 300 cycles. Subsequently, the water-contact angle after the aging was measured. This was taken as the post-aging water-contact angle. In addition, after contamination of each sample, the water-contact angle α was measured. Specifically, first, a contaminant composed of a higher fatty acid and the samples were placed inside a sealed bottle while maintaining a state in which the contaminant and the samples were not in contact with one another. By heating the interior of the sealed bottle to a temperature of 60-100°C, the higher fatty acid inside the sealed bottle was vaporized and thereby caused to adhere to the coating-film surface of the samples. This state was maintained for a long time (specifically, 100 hours), and then the temperature inside the bottle was cooled to room temperature in the state in which the sealed state was maintained. Next, the fin materials of the samples were taken out of the bottle, and the water-contact angles α were measured. If the contact angle α was 30° or less, then it was evaluated as "excellent"; if the contact angle α was more than 30° and 40° or less, then it was evaluated as "satisfactory"; and if the contact angle α was more than 40°, then it was evaluated as "unsatisfactory."

### (2) Contamination-Adhesion Properties

The contamination-adhesion properties were evaluated by assessing the adhesion of electrically charged dust and electrically conductive dust to the coating-film surface of each sample. Specifically, the electrically charged dust and the electrically conductive dust were each blown against the surface of the coating film of each sample via air. Subsequently, the amount of the electrically charged dust and the amount of the electrically conductive dust adhered to the coating-film surface were each measured. The measurements of the adhered amounts were performed by measuring the weight of each sample before and after the dust was blown against each sample, calculating the amount of adhered dust of each sample based on the weight difference, and then converting it into the amount of adhered dust per unit of area. If the adhered amount of the electrically charged dust was less than 0.2 g/m², then it was evaluated as "excellent"; if the adhered amount of the electrically charged dust was 0.2 g/m² or more and 0.5 g/m² or less, then it was evaluated as "satisfactory"; and if the adhered amount of the electrically charged dust was more than 0.5 g/m², then it was evaluated as "unsatisfactory." The evaluation of the adhered amount of the electrically conductive dust was also performed in the same manner. It is noted that Kanto loam dust, which is a powder stipulated in JIS Z8901-2006, was used as the electrically charged dust, and carbon black, which is a powder stipulated in JIS Z8901-2006, was used as the electrically conductive dust.

### (3) Contamination Removability

Contamination removability was evaluated by assessing removability of electrically charged dust and electrically conductive dust from the coating-film surface of each sample. Specifically, as in the evaluation of contamination-adhesion properties described above, samples were prepared by adhering electrically charged dust and electrically conductive dust to the coating-film surfaces. Next, each sample was cooled to a prescribed temperature from the surface on the opposite side that the dust is adhered to, thereby causing condensed water to form on the surface having the adhered dust. Furthermore, the state in which condensed water flowed off was maintained for a prescribed period of time. Subsequently, the surfaces of each sample were sufficiently dried, after which the amount of the remaining dust that was not removed by the condensed water was measured in the same manner as the evaluation of the adhesion properties described above. If the residual amount of each dust was less than 0.1 g/m², then it was evaluated as "excellent"; if the residual amount of each dust was 0.1 g/m² or more and less than 0.5 g/m², then it was evaluated as "satisfactory"; and if the residual good² of each dust was 0.5 g/m² or more, then it was evaluated as "unsatisfactory."
² Translator's note: " 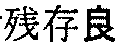 " appears to be a typographical error in the original text and will be replaced with "residual amount" in an amendment.

### (4) Corrosion Resistance

Using each sample, the salt spray test stipulated in JIS Z2371 was performed for 500 hours, and post-test corrosion resistance was evaluated. Observation was performed visually; after the test, if the surface of the coating film did not whiten, then it was evaluated as "excellent"; if part of the surface whitened, then it was evaluated as "satisfactory"; and if the entire surface whitened, then it was evaluated as "unsatisfactory."

### (5) Moisture Resistance

Using each sample, the moisture-resistance test stipulated in JIS H4001 was performed for 960 hours, and post-test moisture resistance was evaluated. Observation was performed visually; after the test, if the surface of the coating film did not whitened, then it was evaluated as "excellent"; if part of the surface whitened, then it was evaluated as "satisfactory"; and if the entire surface whitened, then it was evaluated as "unsatisfactory."

**Table 2**

| Sample No. | Hydrophilic Properties | | | Contamination-Adhesion Properties | | Contamination Removability | | Corrosion Resistance | Moisture Resistance |
|---|---|---|---|---|---|---|---|---|---|
| | Initial Water Contact Angle [°] | Post-Aging Water Contact Angle [°] | Post-Aging Hydrophilic Properties | Electrostatic Dust | Electrically Conductive Dust | Electrostatic Dust | Electrically Conductive Dust | | |
| E1 | 15 | 33 | Satisfactory | Satisfactory | Satisfactory | Satisfactory | Satisfactory | Satisfactory | Satisfactory |
| E2 | 18 | 36 | Satisfactory | Satisfactory | Excellent | Satisfactory | Satisfactory | Satisfactory | Excellent |
| E3 | 17 | 36 | Satisfactory | Satisfactory | Excellent | Satisfactory | Satisfactory | Satisfactory | Excellent |
| E4 | 12 | 37 | Satisfactory | Satisfactory | Satisfactory | Satisfactory | Satisfactory | Satisfactory | Satisfactory |
| E5 | 22 | 38 | Satisfactory | Satisfactory | Satisfactory | Satisfactory | Satisfactory | Satisfactory | Satisfactory |
| E6 | 15 | 32 | Satisfactory | Satisfactory | Satisfactory | Satisfactory | Satisfactory | Excellent | Excellent |
| E7 | 18 | 36 | Excellent | Satisfactory | Excellent | Satisfactory | Satisfactory | Satisfactory | Excellent |
| E8 | 20 | 36 | Satisfactory | Satisfactory | Excellent | Satisfactory | Satisfactory | Satisfactory | Excellent |
| E9 | 34 | 37 | Satisfactory | Satisfactory | Satisfactory | Satisfactory | Satisfactory | Satisfactory | Satisfactory |
| E10 | 18 | 38 | Satisfactory | Satisfactory | Satisfactory | Satisfactory | Satisfactory | Satisfactory | Satisfactory |
| E11 | 30 | 40 | Satisfactory | Satisfactory | Satisfactory | Satisfactory | Satisfactory | Excellent | Excellent |
| E12 | 20 | 28 | Excellent | Satisfactory | Satisfactory | Satisfactory | Satisfactory | Excellent | Satisfactory |
| E13 | 20 | 27 | Excellent | Satisfactory | Satisfactory | Satisfactory | Satisfactory | Satisfactory | Satisfactory |
| C1 | 40 | 65 | Unsatisfactory | Unsatisfactory | Satisfactory | Unsatisfactory | Satisfactory | Satisfactory | Satisfactory |
| C2 | 20 | 40 | Unsatisfactory | Unsatisfactory | Satisfactory | Unsatisfactory | Satisfactory | Satisfactory | Satisfactory |
| C3 | 10 | 37 | Satisfactory | Satisfactory | Unsatisfactory | Satisfactory | Unsatisfactory | Satisfactory | Satisfactory |
| C4 | 10 | 40 | Satisfactory | Satisfactory | Unsatisfactory | Satisfactory | Unsatisfactory | Satisfactory | Satisfactory |
| C5 | 20 | 35 | Unsatisfactory | Satisfactory | Satisfactory | Unsatisfactory | Satisfactory | Satisfactory | Satisfactory |
| C6 | 60 | 80 | Unsatisfactory | Unsatisfactory | Satisfactory | Unsatisfactory | Satisfactory | Satisfactory | Satisfactory |
| C7 | 25 | 30 | Unsatisfactory | Satisfactory | Unsatisfactory | Satisfactory | Unsatisfactory | Satisfactory | Satisfactory |

As can be understood from Table 1 and Table 2, each fin material having the positively-chargeable coating on its outermost surface, which, as in sample E1 to sample E13, is essentially composed only of at least one resin selected from the group consisting of cellulose-based resins, acrylic-based resins, vinyl alcohol-based resins, acrylamide-based resins, and ester-based resins, excels in the contamination-adhesion-inhibition effect. This is because, as shown in FIG. 3, the surface of the positively-chargeable coating 31 is positively charged by contact with air, and therefore the adhesion of dust 91 and the like, which is positively charged, can be inhibited. In addition, because the surface roughness of the coating film 3 of sample E1 to sample E13 is 100 nm or less and the samples excel in surface smoothness, the adhesion of uncharged dust 92 and the like also can be inhibited. Furthermore, because dusts 91, 92 adhered to the surface of the smooth coating film 3 are easily washed away by condensed water or the like, they also excel in contamination removability.

The surface of each positively-chargeable coating 31 in sample E1 to sample E13 is positively charged by friction with air, as described above. If condensed water or the like adheres to the positively-chargeable coating 31, then the surface electrical potential decreases and becomes zero, but it charges once again by drying. Charging by this drying and the charge dissipation by the condensed water are reversible and performed repeatedly.

In addition, the sample E1 to sample E13 also excel in hydrophilic properties and in post-aging hydrophilic properties (i.e., hydrophilicity durability). Furthermore, they also excel in post-contamination hydrophilic properties. In addition, they also excel in corrosion resistance and moisture resistance.

In contrast, the surface of the sample C1, which has a coating composed of an epoxy resin as the coating film, the surface of the sample C2, which has a coating that contains both carboxymethyl cellulose and polyurethane as the coating film, and the surface of the sample C6, which has a coating composed of polyurethane as the coating film, are negatively charged by contact with air. Consequently, the adhesion properties with respect to contaminants, such as dust, the removability of contaminants, and the like were insufficient. In particular, the adhesion properties and removability of positively charged electrically charged dust were poor. In addition, the hydrophilic properties-particularly the post-aging hydrophilicity durability and the post-contamination hydrophilicity durability-of sample C1 to sample C6 were also insufficient. The post-contamination hydrophilicity durability was also insufficient for sample C2.

In addition, with regard to sample C3 and sample C4, in which the surface roughness Ra of the coating film was large and the smoothness was insufficient, the adhesion properties, the removability, etc. of contaminants, such as electrically conductive dust, were insufficient. In addition, with regard to sample C5, which contains a water-soluble resin, such as PEG, in the coating, the removability of electrically charged dust and the like were insufficient. Furthermore, the post-contamination hydrophilicity durability was also insufficient. In addition, the post-contamination hydrophilicity durability of sample C7, which has silica particles in the coating, was insufficient. Furthermore, the surface roughness of sample C7, which has the silica particles, became large and, as in sample 3 and sample 4, the adhesion properties, the removability, etc. of contaminants, such as electrically conductive dust, were insufficient.

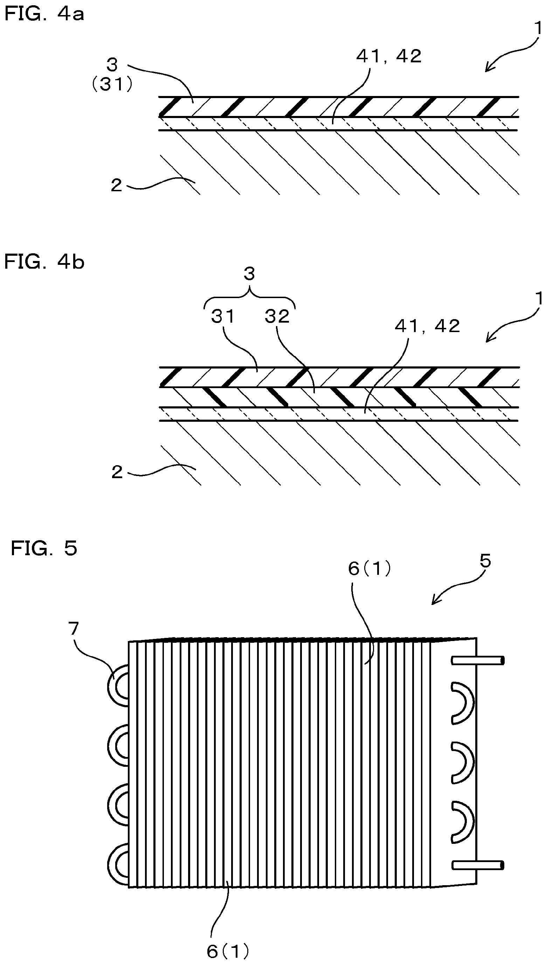

In the present example, although a fin material was described in which the coating film 3, which comprises the positively-chargeable coating 31, was formed directly on the substrate 2, as shown in FIG. 1, the fin material may have at least one of a chemical-conversion coating 41 and a primer layer 42 between the substrate 2 and the coating film 3, which comprises the positively-chargeable coating 31, as shown in FIG. 4(a). In addition, as shown in FIG. 4(b), the outermost surface of the coating film 3 should have the positively-chargeable coating 31 and furthermore may have a corrosion-resistant coating 32.

### (Working Example 2)

The present example is an example of a heat exchanger comprising fins composed of the fin materials of working example 1. As shown in FIG. 5, the heat exchanger 5 is a cross-fin-tube type and comprises: numerous sheet-shaped fins 6, each composed of the fin material 1, and metal tubes 7 that pass through these and are for transferring heat. The fins 6 are spaced apart by a prescribed spacing and are disposed in parallel. The width of each plate fin is, for example, 25.4 mm; the height is, for example, 290 mm; the fin-stacking pitch is, for example, 1.4 mm; and the width of the entire heat exchanger is, for example, 300 mm. The height direction of the fin 6 is the rolling-parallel direction of the substrate. There are two columns of the metal tube 7 in the width of the fins, and there are 14 stages of the metal tube 7 in the fin height. It is noted that, for the sake of convenience in the preparation of the drawing, several of the metal tubes 7 are omitted in FIG. 5. In addition, the metal tube is a copper tube having a helical groove on its inner surface. The dimensions of the metal tube are outer diameter: 7.0 mm, bottom-wall thickness: 0.45 mm, fin height: 0.20 mm, fin vertical angle: 15.0°, and helix angle: 10.0°.

The heat exchanger 5 was prepared as follows. First, assembly holes (not shown), each having a fin-collar part with a height of 1-4 mm for inserting the metal tubes 7 therethrough and fixing such, were formed by press working the fins 6, each composed of the fin material 1. After stacking the plate fins, the separately prepared metal tubes 7 were inserted through the interiors of the assembly holes. A copper tube, in which a groove was formed on its inner surface by rolling or the like and which was then cut to a standard length and hairpin bent, was used as the metal tubes 7. Next, by inserting tube-expanding plugs from one end of the metal tubes 7 and widening the outer diameter of the metal tubes 7, the metal tubes 7 were secured to the plate fins 6. After the tube-expanding plugs were removed, U-bent tubes were joined, by braising, to the metal tubes 7, and thereby the heat exchanger 5 was obtained.

By using samples E1-E13 according to working example 1 as the fin materials 1, contaminants, such as dust, tend not to adhere to the fins 6 of the heat exchanger 5 and, even if these contaminants adhere, they are easily removed by condensed water or the like. Furthermore, the fins 6 also excel in hydrophilic properties, hydrophilicity durability, and the like.

## Claims

1. A heat-exchanger fin material comprising:
a substrate composed of aluminum; and
a coating film formed on at least one surface of the substrate and composed of a coating having one layer or two or more layers;
wherein the coating film has a positively-chargeable coating on its outermost surface;
the positively-chargeable coating is essentially composed of only at least one resin selected from the group consisting of cellulose-based resins, acrylic-based resins, vinyl alcohol-based resins, acrylamide-based resins, and ester-based resins; and
the surface roughness Ra of the coating film is 100 nm or less.

2. The heat-exchanger fin material according to claim 1, wherein the surface roughness Ra of the coating film is 50 nm or less.

3. The heat-exchanger fin material according to claim 1, wherein the surface roughness Ra of the coating film is 20 nm or less.

4. The heat-exchanger fin material according to any one of claims 1-3, wherein the water-contact angle on the surface of the coating film is 40° or less.

5. The heat-exchanger fin material according to any one of claims 1-3, wherein the water-contact angle on the surface of the coating film is 30° or less.

6. The heat-exchanger fin material according to any one of claims 1-5, wherein the film thickness of the positively-chargeable coating is 0.1-6 µm.

7. A heat exchanger comprising:
a fin composed of the heat-exchanger fin material according to any one of claims 1-6.
